# EUROPEAN PATENT SPECIFICATION

(11) **EP 3 104 034 B1**
(45) Date of publication and mention of the grant of the patent: **09.05.2018**
(21) Application number: 16173181.5
(22) Date of filing: 06.06.2016
(51) Int. Cl.: F16D 43/284

(54) **HYDRAULIC CENTRIFUGAL COUPLING**
HYDRAULISCHE ZENTRIFUGALKUPPLUNG
EMBRAYAGE CENTRIFUGE HYDRAULIQUE

(30) Priority: 11.06.2015 IT UB20151159
(43) Date of publication of application: 14.12.2016
(73) Proprietor: Gambini, Angelo, 20010 Pogliano Milanese (MI) (IT)
(72) Inventor: Gambini, Angelo, 20010 Pogliano Milanese (MI) (IT)
(74) Representative: Porta, Checcacci & Associati S.p.A

(56) References cited:
- FR-A- 695 611
- US-A- 2 210 416
- US-A- 3 250 358

## Description

The present invention refers to a hydraulic centrifugal coupling.

Hydraulic centrifugal couplings are known in the art.

For example, IT 1366843, to the same Applicant, describes a hydraulic centrifugal coupling rotating about an axis and adapted for transmitting the motion from a driving element to a driven element. Such transmission is made by means of friction surfaces pressed against one another by a movable septum, inside the coupling, which moves in axial direction as a function of the pressure difference of liquid between two chambers also present inside the coupling and separated from one another by said movable septum.

The movable septum has sealing members at a contact surface thereof with a tubular element that constitutes the outer casing of the coupling. Such sealing members have the function of avoiding a possible leak of liquid from one chamber to the other at such a contact surface.

However, the Applicant has observed that due to the axial sliding of the movable septum with respect to the tubular element, the sealing members tend to wear progressively over time due to the rubbing thereof on the sliding surfaces (represented by the contact surface of the movable septum and the contact surface of the tubular element). The extent of such wearing can depend on various factors like, for example, the roughness of the sliding surfaces; the natural ageing process of the material of the sealing members, which can lead to the loss of elasticity by the seal; the infiltration of solid particles, placed in circulation together with the liquid, and their possible accumulation between the sliding surfaces.

Such a wearing phenomenon of the sealing members is particularly critical because it can lead to the progressive decrease of the pressure difference between the two chambers and, therefore, of the torque able to be transmitted from the driving element to the driven element. Another hydraulic centrifugal coupling is e.g. known from US 2 210 416 A. The technical problem of the invention is therefore that of providing a hydraulic centrifugal coupling that has improved performance in terms of ability to prevent undesired leaks of liquid from one chamber to the other at a radially outer area of the two chambers.

The invention therefore concerns a coupling according to claim 1.

In particular, the invention concerns a hydraulic centrifugal coupling comprising:
- a driving assembly adapted to be set in rotation about a rotation axis A,
- a driven assembly adapted to be set in rotation about the rotation axis A for a transmission of rotary motion from the driving assembly to the driven assembly, said driving assembly and said driven assembly forming a compartment, adapted to contain liquid, having a first and second chamber, axially separated from each another by pushing members, said pushing members comprising a rigid septum movable along an axial direction, parallel to said rotation axis A,
- at least one driving friction member and at least one driven friction member arranged in said first chamber, movable along said axial direction,
wherein said first and second chamber are in fluid communication with each other so as to produce, in a rotation start-up phase of the driving assembly, a transfer of the liquid from the first chamber to the second chamber that generates an axial pressure on said pushing members such as to press said at least one driving friction member and said at least one driven friction member one against the other and thus obtain said transmission of rotary motion from the driving assembly to the driven assembly,
characterised in that said first and second chamber are respectively delimited in a radially outer position by a first and second outer circumferential surface and in that the pushing members also comprise an elastically deformable septum fixed, at a radially outer portion thereof, between said first and second outer circumferential surfaces, said elastically deformable septum being adapted to elastically deform under the axial pressure generated by said transfer of liquid from the first chamber to the second chamber so as to axially push said rigid septum.

The presence of the elastically deformable septum, fixed, at a radially outer portion thereof, between said first and second outer circumferential surfaces, advantageously makes it possible to prevent undesired leaking of liquid from one chamber to the other in a radially outer area through a seal that is not subject to wearing by rubbing. Such an elastically deformable septum, indeed, being fixed stably between said first and second outer circumferential surfaces of the chambers, cannot wear because it does not slide with respect to said surfaces. At the same time, the use of an elastically deformable material allows such a septum to deform axially under the axial pressure generated by the transfer of liquid and, therefore, to axially push said rigid septum, despite the firm fastening of the elastically deformable septum to the outer circumferential surfaces of the chambers.

In the present description and claims, the terms "upper", "lower", "inner", "outer", "proximal", "distal", "above", "below", "high" and "low" refer to geometric and structural elements of the coupling and of the components of which it consists, as they are oriented in the mounted condition and in normal use. In particular, the terms distal and proximal are used with reference to the motor to which the coupling is directly or indirectly connected. The terms outer and inner with reference to a radial direction are used with reference to the rotation axis A, so an outer element/component is the one farthest from the rotation axis A and an inner element/component is the one closest to the rotation axis A.

In the present description and claims, an element is said to be fixedly connected to another element when the two elements are made in a single piece or are two distinct pieces but connected together so that they move as if they were a single piece. An element is said to be firmly fastened to another element when the two elements are two distinct pieces but connected together so that they move as if they were a single piece.

The terms "axial", "axially", "radial", "radially", "circumferential" and "circumferentially" are used with reference to the coupling.

In particular, the terms "axial" and "axially" are meant to indicate references/quantities arranged/measured or extending in a direction substantially parallel to the rotation axis A of the coupling.

The terms "transverse" and "transversally" are meant to indicate references/quantities arranged/measured or extending in a direction that lies in a plane perpendicular to the rotation axis A of the coupling.

The terms "radial" and "radially" are meant to indicate references/quantities arranged/measured or extending in a direction that intersects the rotation axis of the coupling and lies in a plane perpendicular to such a rotation axis.

The terms "circumferential" and "circumferentially" are meant to indicate references/quantities arranged/measured or extending along a circumference that extends around the rotation axis A of the coupling or an axis parallel thereto.

In at least one of the aforementioned aspects, the invention comprises one or more of the following preferred characteristics that are described hereinafter.

Typically, the driving assembly is adapted for being set in rotation by a motor. Typically, the motor is outside of the coupling. Typically, the motor is an electric motor.

The coupling is generally cylindrical in shape. The compartment is generally shaped like a cylindrical crown, i.e. a shape having a cross section generally like a circular crown. The first and the second chamber extend circumferentially for the entire circumferential extension of the compartment. The first and the second chamber are generally shaped like a cylindrical crown, i.e. a shape with a cross section generally like a circular crown. Circumferentially, they are delimited in radially outer position by said first and second outer circumferential surface and in radially inner position by inner circumferential surfaces. Moreover, transversally, the first and the second chamber are delimited by respective first and second transverse surfaces and by said pushing members.

The elastically deformable septum is suitably squashed, at said radially outer portion thereof, between said first and second outer circumferential surfaces and firmly fastened to them, for example through bolts. Preferably, in the area of contact between said radially outer portion of the elastically deformable septum and said first and second outer circumferential surfaces of the chambers, the outer circumferential surfaces are corrugated, for example through the presence of a plurality of circumferential grooves, arranged radially on top of one another. This characteristic is advantageous because, by exploiting the elasticity of the material, the elastically deformable septum is introduced into such grooves increasing the seal of the coupling between the elastically deformable septum and said first and second outer circumferential surfaces.

In a preferred embodiment, at said radially outer portion of the elastically deformable septum, said first and second outer circumferential surfaces of the chambers project radially so as to have a section of radial surface that faces said radially outer portion of the elastically deformable septum and extends along a direction substantially parallel to it. The radially outer portion of the elastically deformable septum is therefore arranged between the sections of radial surface of said first and second outer circumferential surfaces of the chambers and is fixed to them, for example through suitable bolts that engage in a plurality of through holes arranged circumferentially in the deformable septum and in such radial surface sections. In this embodiment, the corrugation is preferably made at radial surface sections of said first and second outer circumferential surfaces of the chambers.

Preferably, said first and second outer circumferential surfaces are part of said driving assembly.

Preferably, said first and second transverse surface are part of said driving assembly.

Preferably, said inner circumferential surfaces are part of said driven assembly.

Preferably, the rigid septum is substantially transverse to the rotation axis A. Preferably, said rigid septum has a generally circular crown shaped cross section.

Preferably, the elastically deformable septum is substantially transverse to the rotation axis A. Preferably, said elastically deformable septum has a generally circular crown shaped cross section.

Preferably, said at least one driving friction member is substantially transverse to the rotation axis A. Preferably, said at least one driving friction member is a disc having a generally circular crown shaped cross section.

In a preferred embodiment, said at least one driving friction member comprises a plurality of plates that are distinct and separate from one another, circumferentially arranged in series. Preferably, said plates are made of steel. Preferably, they are coated with organic friction material. The use of plates advantageously makes it possible to select the number of plates to be used (for example from 2 to 6) as a function of the pressure that is wished to be obtained on said at least one driven friction member in order to optimise the friction coefficient between the driving and driven friction members.

Preferably, said at least one driven friction member is substantially transverse to the rotation axis A. Preferably, said at least one driven friction member is a disc having a generally circular crown shaped cross section.

Preferably, the rigid septum is coupled with the driving assembly so as to be constrained to it in rotation about the rotation axis A and to be able to translate with respect to the driving assembly along said axial direction. In a preferred embodiment, the rigid septum is coupled with the driving assembly through a plurality of substantially axial pins firmly fastened to the driving assembly and arranged circumferentially.

Preferably, said at least one driving friction member is coupled with the driving assembly so as to be constrained to it in rotation about the rotation axis A and to be able to translate with respect to the driving assembly along said axial direction. In a preferred embodiment, said at least one driving friction member is coupled with the driving assembly through a plurality of substantially axial pins firmly fastened to the driving assembly and arranged circumferentially.

Preferably, said at least one driven friction member is coupled with the driven assembly so as to be constrained to it in rotation about the rotation axis A and to be able to translate with respect to the driven assembly along said axial direction. In a preferred embodiment, said at least one driven friction member is coupled with the driven assembly through a plurality of substantially axial pins firmly fastened to the driven assembly and arranged circumferentially.

Preferably, the coupling comprises at least two driving friction members, each driven friction member being axially arranged between two driving friction members.

Preferably, the number of driven friction members is selected as a function of the power and the number of revolutions of the motor and the desired dimensions for the coupling (for example, to adapt it to the height of the support feet of the motor). Preferably, the number of driven friction members varies from 1 to 3. The number of driving friction members is preferably selected so as to allow the packing of the driven friction members between one driving friction member and the other. Preferably, the number of driving friction members varies from 2 to 4.

Preferably, the elastically deformable septum extends radially towards the rotation axis A for at least a large part of the radial extension of said rigid septum. More preferably, the elastically deformable septum extends radially towards the rotation axis A substantially for the entire radial extension of said rigid septum.

Preferably, the elastically deformable septum is fixed, at a radially inner portion thereof, to said rigid septum, for example through a plurality of bolts arranged circumferentially.

Preferably, the elastically deformable septum comprises, at said radially inner portion thereof, a containment element. Preferably, the containment element is fixed to the deformable septum and to the rigid septum, for example through said plurality of bolts. Said containment element advantageously makes it possible to prevent an elongation along a radial direction of the elastically deformable element during the fastening thereof to said rigid septum, for example during the mounting of said plurality of bolts.

The elastically deformable septum is preferably made of elastomeric material. Said elastomeric material is preferably selected so as to be resistant to high temperatures, for example at the working temperature of a fuse element, like, for example, at least 150° or, preferably, at least 180°.

Preferably, the pushing members are adapted to axially separate said first and second chamber so as to leave a radially inner passage for the liquid. In particular, the passage is located near to the inner circumferential surfaces of the chambers. The radially inner passage advantageously allows the transfer of liquid between the two chambers in an initial phase, with the coupling still, in which the compartment is filled with the liquid up to a predetermined level. Moreover, in the start-up phase of the coupling, such passage allows the backward transfer of liquid from the second chamber to the first chamber when, due to the transfer of liquid from the first chamber to the second chamber, the second chamber is full.

Preferably, the fluid communication between said first and second chamber is made through a first conduit that extends from the first chamber to the second chamber, said first conduit having an inlet opening into the first chamber adapted to be immersed in the liquid during the rotation of the driving assembly and arranged so as to face towards a first direction R1 of rotation of the liquid about the rotation axis A.

In a preferred embodiment, the fluid communication between said first and second chamber is also made through a second conduit that extends from the first chamber to the second chamber, said second conduit having an inlet opening into the first chamber adapted to be immersed in the liquid during the rotation of the driving assembly and arranged so as to face towards a second direction R2 of rotation of the liquid, opposite the first direction R1 of rotation of the liquid. This embodiment is advantageous since it allows the coupling to be used in the two directions of rotation about the rotation axis A.

The inlet opening of said first conduit (and of said second conduit, if present) is suitably arranged near to said first outer circumferential surface of said first chamber. This advantageously makes it possible to intercept the liquid that, during the rotation of the driving assembly, by centrifugal force is arranged near to the outer circumferential surfaces of the chambers.

In an embodiment, the first and the second conduits are in diametrically opposite positions with respect to the rotation axis A.

In a preferred embodiment, the second chamber comprises a flow diverting member configured so as to divert the liquid transferred from the first chamber to the second chamber from a radially inner position towards a radially outer position of the second chamber. In this way, when the second chamber is full of liquid, the liquid transferred from the first chamber to the second chamber mixes with the liquid already present in the second chamber before being transferred backwards into the first chamber through the radially inner passage. This advantageously makes it possible to mix the hotter liquid coming from the first chamber (which heated up due to the transformation of power in heat by friction between the friction members) with the colder liquid present in the second chamber and, therefore, to increase the thermal capacity of the coupling.

In a preferred embodiment, said at least one driving friction member and said at least one driven friction member are kept suitably spaced from each other by suitable elastic means. Said elastic means comprise, for example, one or more disc springs arranged in series. This advantageously makes it possible to detach the friction members from one another when the coupling is stopped and to avoid the friction members to be already packed at a subsequent start-up of the coupling with consequent starting of the motor at non-zero load.

Suitably, the first conduit (and, in the preferred embodiment with two conduits, also the second conduit) is in fluid communication with the second chamber through a calibrated hole. In a preferred embodiment, said calibrated hole is made in a replaceable piece of the coupling. This advantageously makes it possible to easily change the calibrated hole dimensions and, therefore, to calibrate the flow of liquid, through simple replacement of such a piece.

In a preferred embodiment, the coupling comprises, at an outer circumferential wall thereof, at least three holes with three respective plugs intended to fill the compartment with the liquid, two of which are arranged in diametrically opposite positions with respect to the rotation axis A in a plane transverse thereto, and one at 90° from them in such a transverse plane. This makes it possible to substantially facilitate the filling operation of the compartment. Indeed, a skilled technician can fill the compartment with liquid through the hole at 90° by observing the fill level through the two diametrically opposite holes (suitably open for the filling operation). The compartment can, for example, be considered correctly filled when the liquid appears at the level of the two diametrically opposite holes.

In a preferred embodiment, the coupling comprises, at an outer circumferential wall thereof, two holes, with respective plugs, substantially axially adjacent and connected to each other by a safety conduit that is normally closed through a fuse sealably inserted. The whole thing is configured so as to place the two chambers in fluid communication in the case of melting of the fuse. In this way, in the case of sudden blocking of the driven assembly, the friction members start to slide, the power generated is transformed into heat by the friction that heats the liquid until it reaches the melting temperature of the fuse that, once melted, places the two chambers in fluid communication, allowing the liquid to flow from the second chamber to the first and restoring a liquid level that is equal in both chambers. The pushing members therefore decrease their thrust on the friction members, until it is zeroed when the liquid level goes back to be equal between the two chambers.

Moreover, the positioning of the fuse in a hole accessible from the outer circumferential wall of the coupling is advantageous since it allows easy replacement of the fuse in the case of melting thereof.

Further characteristics and advantages of the present invention will become clearer from the following detailed description of some preferred embodiments thereof, made with reference to the attached drawings. The different characteristics in the single configurations can be combined with each other as desired according to the previous description, if it was wished to have the advantages resulting specifically from a particular combination.

In such drawings,
- figure 1 is an axial section view of a coupling according to an embodiment of the present invention in a rest condition of the coupling, i.e. with the coupling still;
- figure 2 is the view of figure 1 in an operative condition of the coupling, i.e. of rotation in a start-up phase of the coupling;
- figure 3 is a transverse view of a simplified portion of the coupling of figure 1, which shows the coupling in the rest condition;
- figure 4 is the view of figure 3 that shows the coupling in rotation along a first direction R1 of rotation;
- figure 5 is the view of figure 3 that shows the coupling in rotation along a second direction R2 of rotation, opposite the first direction R1 of figure 4;
- figure 6 shows an axial section view of a detail of a coupling according to another embodiment of the invention; and
- figure 7 shows a simplified transverse view of the detail of the coupling of figure 6.

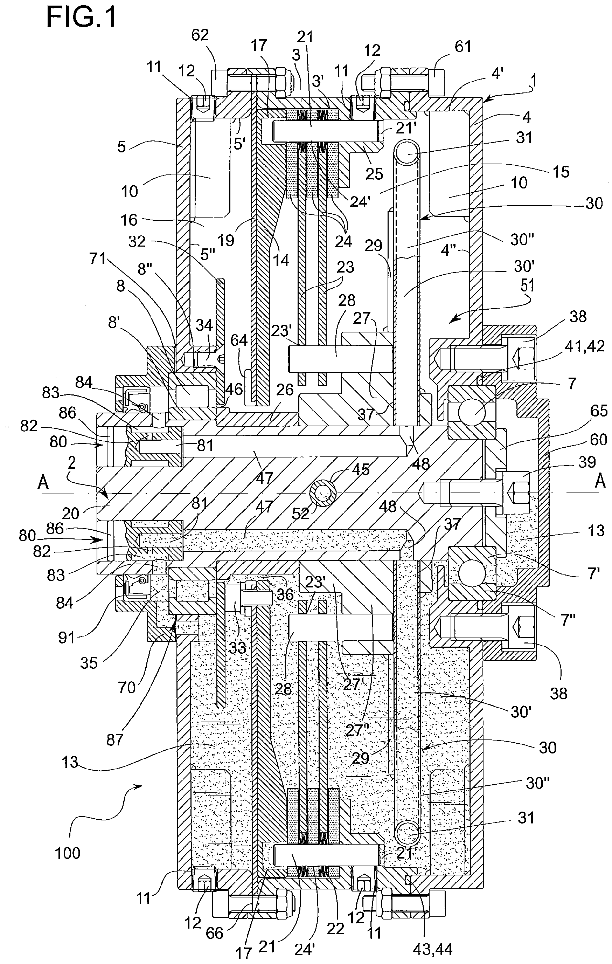

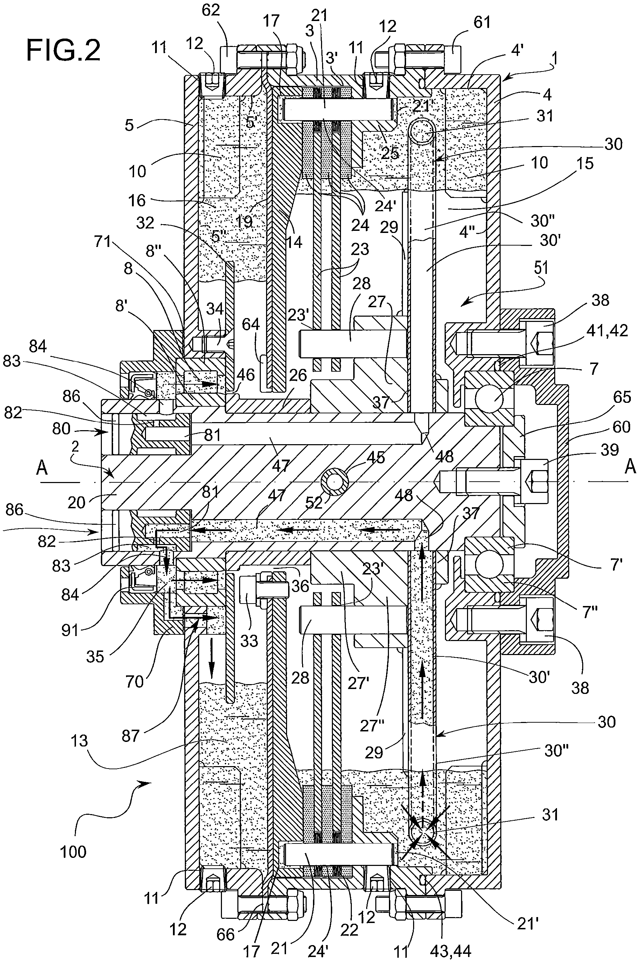

With reference to the cited figures, a hydraulic centrifugal coupling is shown, wholly indicated with 100, which can be set in rotation about a rotation axis A by a motor (not visible in the figures, but able to be connected directly or indirectly to the coupling at the right side of the section of figures 1 and 2).

As illustrated in figures 1 and 2, the hydraulic centrifugal coupling 100 comprises a driving assembly 1 and a driven assembly 2.

The driving assembly 1 comprises a tubular element 3, a proximal half-shell 4 and a distal half-shell 5. The proximal half-shell 4 is arranged in an axially proximal position with respect to the motor. The distal half-shell 5 is arranged in axially opposite position with respect to the motor, on the side of a user (not visible in the figures, but able to be directly or indirectly connected to the coupling at the left side of the section of figures 1 and 2). The tubular element 3 is arranged in an axially intermediate position between the proximal half-shell 4 and the distal half-shell 5.

The tubular element 3 is fixed to the proximal half-shell 4, for example by means of bolts 61. The tubular element 3 is also fixed to the distal half-shell 5, for example through bolts 62.

The tubular element 3 comprises a stop portion 25. Said stop portion 25 has a circumferential extension of 360° with an annular part projecting radially inwards.

The driven assembly 2 comprises a driven shaft 20, an annular insert 26, a hub 27, two ducts 30, two reinforcing ribs 29.

The driven shaft 20, the annular insert 26 and the hub 27 generally form an inner central part of the coupling 100. The driven shaft 20 is substantially a cylindrical body, having rotation axis aligned with the rotation axis A of the coupling. The driven shaft 20 is adapted to be connected to a user. An example of user can be an average inertia machine with a start-up through a squirrel cage electric motor like, for example, a conveyor belt. The annular insert 26 and the hub 27 are mounted on the outer surface of the driven shaft 20, so that the annular insert 26 prevents the hub 27 from translating axially towards the user side. The hub 27 has a first annular portion 27', that extends circumferentially directly in contact with the outer surface of the driven shaft 20, and a second annular portion, radially projecting 27", extending radially outwards with respect to the first annular portion 27'. The first annular portion 27' has two through holes 37 having axis perpendicular to the rotation axis A and arranged 180° from one another with respect to the rotation axis A. The second annular portion 27" has a plurality of pins 28 arranged circumferentially, the axis of which is substantially parallel to the rotation axis A. For example, such pins 28 can be coupled with interference with the hub 27. The hub 27 is fixed to the driven shaft 20 through a radial pin 52, perpendicular to the rotation axis A, passing through a hole 45 formed in the driven shaft 20.

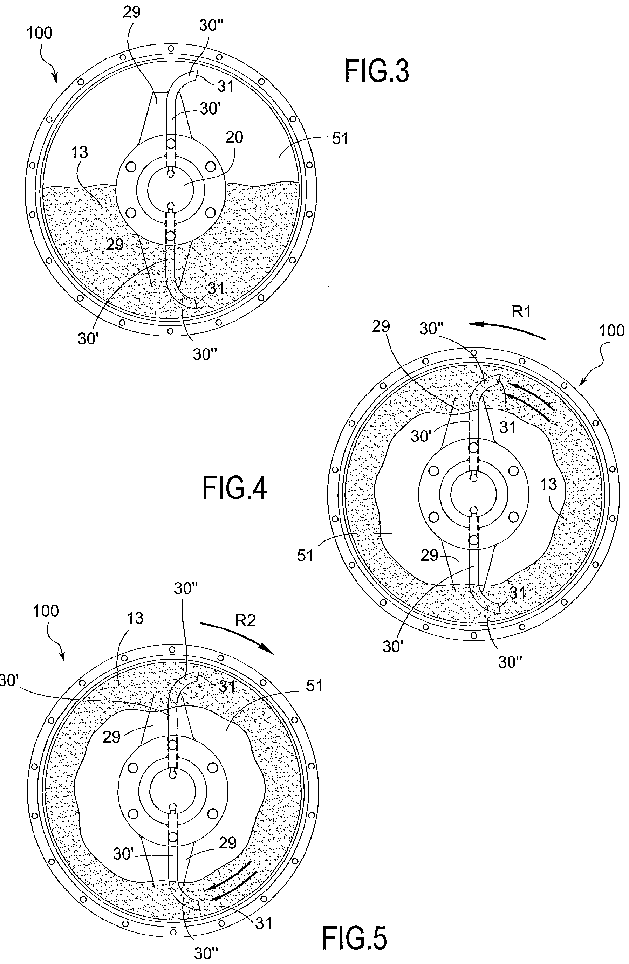

In an axially intermediate position between the hub 27 and the proximal half-shell 4, two ducts 30 are arranged 180° apart from one another with respect to the rotation axis A. The two conduits 30 are fixedly connected to the driven shaft 20. In particular, each conduit 30 has a first substantially rectilinear portion 30', fixed at the respective through hole 37 of the first annular portion 27' of the hub 27, and thus perpendicular to the rotation axis A, a second curved portion 30" (clearly visible in figures 3-5), that curves progressively proceeding radially outwards and a third rectilinear portion defined by a hole 47 made in the axial direction in the driven shaft 20. Each of said holes 47 is connected to the respective first substantially rectilinear portion 30' through a joining hole 48. The two conduits 30 each have an inlet opening 31 respectively facing towards a first direction R1 of rotation of the coupling 100 and a second direction R2 of rotation, opposite the first, as schematically shown in figures 4 and 5. In particular, the two conduits 30 are arranged so that each one has the inlet opening 31 oriented in the opposite direction to the two possible directions of rotation of a liquid 13, for example hydraulic oil, present inside the coupling 100. The two reinforcing ribs 29, one for each conduit 30, are welded both to the hub 27 and to the outer surface of the conduits 30. Such reinforcing ribs 29 have the function of providing support to the conduits 30 during the rotation of the coupling 100.

The end of each hole 47, axially opposite the joining hole 48, communicates with a respective hole 81 made inside a respective extractable piece 80, in a direction parallel to the axis A of the coupling. The extractable pieces 80 are inserted in a suitable seat formed in the driven shaft 20, aligned along an axis parallel to the rotation axis A, and fixed to it, for example through screws (not shown). The access to said extractable pieces 80 takes place directly from the user side. For example, said extractable pieces can have a generally cylindrical shape.

A calibrated hole 82, having axis perpendicular to the rotation axis A, is formed in each extractable piece 80 in radially outer position with respect to the hole 81. Said calibrated hole 82 is adapted for regulating the flow of liquid 13 from the hole 81 to a collection chamber 83, comprised between an outer circumferential surface of the extractable piece 80 and the driven shaft 20. The collection chamber 83 is connected to a hole 84 made in the driven shaft 20 and having axis perpendicular to the rotation axis A. A sealing ring 86 is inserted between the extractable piece 80 and the driven shaft 20 so as to avoid possible leaking of liquid 13 to the outside. The positioning of the calibrated holes 82 inside the extractable pieces 80 advantageously makes it possible to change the size of the calibrated holes 82 as a function of the requirements of use of the coupling 100, by simply extracting such pieces 80 and replacing them with others having calibrated holes 82 of suitable size.

The hole 84 makes it possible to convey the liquid 13 into a distribution chamber 35. Said distribution chamber 35 is comprised between a third flange 70, the driven shaft 20 and a roller bearing 8, and extends circumferentially for 360°. Between the third flange 70 and the driven shaft 20 there is a seal 91, having a circumferential extension of 360°. When a centrifugal force is applied, the distribution chamber 35 conveys the liquid 13 in a preferential path defined by a plurality of openings 87, visible in the lower part of figures 1 and 2. A minimal part of liquid 13 still manages to penetrate inside the roller bearings 8, allowing lubrication.

Between the third flange 70 and the distal half-shell 5 there is a flat seal 71, having a circumferential extension of 360°.

The driving assembly 1 is rotatably coupled with the driven shaft 20 through a ball bearing 7, at the proximal half-shell 4, and the roller bearing 8, at the distal half-shell 5.

The ball bearing 7 comprises a radially inner fifth wheel 7' and a radially outer fifth wheel 7". The inner fifth wheel 7' is kept in its seat axially by the driven shaft 20 and by a first flange 65. The outer fifth wheel 7" is kept in its seat axially by the proximal half-shell 4 and by a second flange 60. The first flange 65 is fixed to the shaft 20, for example through a screw 39 aligned along the rotation axis A. The second flange 60 is fixed to the proximal half-shell 4, for example through screws 38.

The second flange 60 is adapted for being coupled directly or indirectly with the motor.

The tubular element 3, the proximal half-shell 4 and the distal half-shell 5, the second flange 60 and the third flange 70 form an outer casing of the coupling 100. Preferably, they are made of steel. This allows the outer structure of the coupling 100 to be made of a material (steel) that can also be used in critical environments like, for example, mines.

A sealing ring 41 is inserted in a seat 42 having a circumferential extension of 360° and comprised between the proximal half-shell 4, the ball bearing 7, and the second flange 60. A further sealing ring 43 is inserted in a seat 44 having a circumferential extension of 360° and comprised between the tubular element 3 and the proximal half-shell 4.

The roller bearing 8 consists of a radially inner fifth wheel 8' and a radially outer fifth wheel 8". The inner fifth wheel 8' is kept in its seat axially by the driven shaft 20 and by the annular insert 26. The outer fifth wheel 8" is kept in its seat axially by the third flange 70 and by a flow diverting member 32. The third flange 70 is fixed to the distal half-shell 5, for example through screws (not visible in the figures). The flow diverting member 32 is a dividing wall having a substantially discoidal shape that is centrally hollow and is fixed to the distal half-shell 5, for example through screws 34. The central hole of the substantially hollow discoidal shape of the flow diverting member 32 is sized so as to house the driven shaft 20 and the annular insert 26 inside it, leaving a gap 46 between the flow diverting member 32 and the annular insert 26.

Each of the half-shells 4 and 5 has a blading comprising a plurality of blades 10, for example from 3 to 6, distributed circumferentially. Said blades 10 are welded to the inner surface of the respective half-shell to which they belong.

The driving assembly 1 and the driven assembly 2 form an inner compartment 51, adapted for containing the liquid 13. The compartment 51 comprises a first chamber 15 and a second chamber 16 that have a circumferential extension of 360° and are axially separated from one another by pushing members 14, 19.

The pushing members 14, 19 comprise a rigid septum 14 and an elastically deformable septum 19 resting on the rigid septum 14.

The first chamber 15 and the second chamber 16 are respectively delimited in radially outer position by first outer circumferential surfaces 3', 4' and a second outer circumferential surface 5', respectively consisting of inner circumferential surfaces of the tubular element 3, of the proximal half-shell 4 and of the distal half-shell 5. In radially inner position the chambers 15, 16 are delimited by inner circumferential surfaces consisting of surfaces of the driven shaft 20, of the annular insert 26 and of the hub 27. Moreover, transversally, the first chamber 15 is delimited by a first transverse surface 4" consisting of an inner transverse surface of the proximal half-shell 4 and the rigid septum 14 whereas the second chamber 16 is delimited by a second transverse surface 5" consisting of an inner transverse surface of the distal half-shell 5 and the elastically deformable septum 19.

The rigid septum 14 is a substantially discoidal shaped body that is centrally hollow, having radially variable thickness.

The radially outer part of the rigid septum 14, having greater thickness than the radially inner part, houses a plurality of blind holes 17 arranged circumferentially and substantially parallel to the rotation axis A of the coupling. In each blind hole 17 a pin 21 is inserted, the axis of which is parallel to the rotation axis A. Each pin 21 is coupled with interference with a respective seat 21' formed in the tubular element 3 near to the stop portion 25. The presence of the pins 21 therefore allows the rotary motion to the transmitted from the driving assembly 1 to the rigid septum 14. The pins 21 also prevent the rigid septum 14 from moving in the radial direction beyond a predetermined clearance. The rigid septum 14 in any case remains free to translate in the axial direction with respect to the driving assembly 1 and, in particular, with respect to the inner circumferential surface 3' of the tubular element 3 and to the pins 21.

The elastically deformable septum 19 is a body of elastomeric material substantially shaped like a hollow discoid, which is axially comprised between the rigid septum 14 and the second chamber 16.

In a radially outer portion thereof, the elastically deformable septum 19 is engaged between the tubular element 3 and the distal half-shell 5. In particular, at said radially outer portion of the elastically deformable septum 19, the inner circumferential surface 3' of the tubular element 3 and the inner circumferential surface 5' of the distal half-shell 5 project radially outwards so as to have a section of radial surface that faces said radially outer portion of the elastically deformable septum 19 and is substantially parallel to it. The radially outer portion of the elastically deformable septum 19 is therefore arranged between the radial surface sections of the inner circumferential surface 3' of the tubular element 3 and of the inner circumferential surface 5' of the distal half-shell 5 and is fixed to them, for example through the bolts 62 that engage in a plurality of through holes distributed circumferentially in the deformable septum 19 and in such radial surface sections. The elastically deformable septum 19 is therefore firmly fastened to the driving assembly 1 so as to be constrained to it in axial translation, in radial translation and in rotation about the rotation axis A.

Preferably, in the contact area with the radially outer portion of the elastically deformable septum 19, the radial surface sections of the inner circumferential surface 3' of the tubular element 3 and of the inner circumferential surface 5' of the distal half-shell 5 have a plurality of circumferential grooves 66, arranged radially on top of one another. This is advantageous because, by exploiting the elasticity of the material, the elastically deformable septum 19 is introduced into such circumferential grooves 66 increasing the seal of the coupling between the elastically deformable septum 19 and said circumferential surfaces 3', 5'.

Therefore, the elastically deformable septum 19 sealably isolates the two chambers 15 and 16, preventing undesired leaks of liquid, at the radially outer portion of the elastically deformable septum 19. Moreover, the elastically deformable septum 19 and the rigid septum 14 are adapted to axially separate said first and second chamber 15, 16 so as to leave a radially inner passage 36 for the liquid, useful during the filling and the operation of the coupling as described in detail hereinafter. In particular, the central hole of the substantially hollow discoidal shape of the elastically deformable septum 19 and of the rigid septum 14 is sized so as to house the driven shaft 20 and the annular insert 26 inside it, leaving said passage 36 between the annular insert 26 and the septums 14, 19.

The elastically deformable septum 19 extends radially towards the rotation axis A substantially for the entire radial extension of said rigid septum 14. The elastically deformable septum 19 is fixed, at a radially inner portion thereof, to said rigid septum 14, for example through several bolts 33, arranged circumferentially in series.

The elastically deformable septum 19 comprises, at said radially inner portion thereof, a containment element 64. The containment element 64, the elastically deformable septum 19 and the rigid septum 14 are fixed together, for example through the bolts 33.

In the first chamber 15, besides the conduits 30, driving friction members 24 and driven friction members 23 are housed. The driving friction members 24 are substantially hollow discoidal shaped bodies, housed axially between the rigid septum 14 and the stop 25 of the tubular element 3.

According to a preferred embodiment (not shown) the bodies of the driving friction members 24 can have a circumferentially discontinuous shape. In particular, said driving friction members 24 can each comprise a plurality of plates that are distinct and separate from one another, circumferentially arranged in series. Preferably, the plates are made of steel and coated with organic friction material. The use of such plates advantageously makes it possible to select the number of plates to use (for example from 2 to 6) as a function of the pressure that is wished to be applied on the driven friction members 23 in order to optimise the friction coefficient between the driving and driven friction members 24, 23. The radially outer end of the driving friction members 24 faces with a certain clearance towards the inner circumferential surface 3' of the tubular element 3. Said driving friction members 24 have a plurality of holes 24' distributed circumferentially and having axis parallel to the rotation axis A, each of which is adapted for housing the corresponding pin 21. In this way, the driving friction members 24 are constrained in rotation to the driving assembly 1. The pins 21 also prevent the driving friction members 24 from moving in the radial direction beyond a predetermined clearance. The driving friction members 24, however, remain free to translate in the axial direction with respect to the driving assembly 1 and, in particular, with respect to the inner circumferential surface 3' of the tubular element 3 and to the pins 21.

The driven friction members 23 are substantially hollow discoidal shaped bodies, housed axially between the rigid septum 14 and the second annular portion 27" of the hub 27. Said driven friction members 23 extend radially from the hub 27 to the pins 21, remaining suitably detached from them. Moreover, said driven friction members 23, in a radially inner portion thereof, have a plurality of holes 23', arranged circumferentially and having axis parallel to the rotation axis A, each of which is adapted for housing the corresponding pin 28. In this way, the driven friction members 23 are constrained in rotation to the driven assembly 2. The pins 28 also prevent the driven friction members 23 from moving in the radial direction beyond a predetermined clearance. The driven friction members 23, however, remain free to translate in the axial direction with respect to the driven assembly 2, in particular with respect to the pins 28.

The friction members 23, 24 are arranged axially in an alternate manner. In particular, in the configuration illustrated in figures 1 and 2, three driving friction members 24 are illustrated, alternating with two driven friction members 23 with each driven friction member 23 comprised axially between two driving friction members 24.

The number of driven friction members 23 is preferably selected as a function of the power and the number of revolutions of the motor and the desired dimensions for the coupling 100. For example, the number of driven friction members 23 can be selected so as to adapt the outer radius of the coupling 100 to the height of the support feet of the motor. The number of driving friction members 24 is preferably selected so as to allow the packing of the driven friction members 23 between one driving friction member 24 and the other.

Suitable elastic means, for example in the form of one or more disc springs 22 in series, are inserted in each annular cavity formed axially between two successive driving friction members 24 and radially between the radially outer end of the driven friction members 23 comprised between them and the inner circumferential surface 3' of the tubular element 3. The disc springs 22 extend circumferentially. Moreover, they are crossed by the pins 21 and, thus, constrained in rotation to the driving assembly 1. The pins 21 also prevent the disc springs 22 from moving in the radial direction beyond a predetermined clearance. The disc springs 22, however, remain free to expand and contract in the axial direction with respect to the driving assembly 1, in particular with respect to the pins 21 and to the inner circumferential surface 3' of the tubular element 3. The disc springs 22 have the function of keeping the friction members 23 and 24 normally spaced apart, in other words in a rest position of the coupling 100 (i.e. with coupling still) and in an initial rotation phase before the transmission of rotary motion from the driving assembly 1 to the driven assembly 2.

In the illustrated embodiment, the coupling 100 also comprises four pairs of threaded holes 11 respectively made in the tubular element 3 and in the proximal half-shell 5, having axis perpendicular to the rotation axis A. The pairs of holes 11 are distributed circumferentially at intervals of 90°. In each of said holes 11 a respective plug 12 is screwed, which can be unscrewed to introduce liquid 13 from the outside into the compartment 51 of the coupling 100. In this way, in the filling phase, the coupling 100 can be rotated about the rotation axis A so as to align two opposite pairs of holes 11 with respect to the rotation axis A on a horizontal plane and the other two pairs on a vertical plane, one upwards and the other downwards. In order to fill the coupling 100, it is sufficient to remove the plugs 12 from at least two respective holes 11 aligned on the horizontal plane and from at least one of the two holes 11 at the top, leaving the plugs 12 in the respective holes 11 at the bottom, and introduce liquid from the hole 11 at the top so that the liquid 13 does not come out from the holes 11 aligned on the horizontal plane, i.e. until the compartment 51 has been half filled, as schematically illustrated in figures 1 and 3.

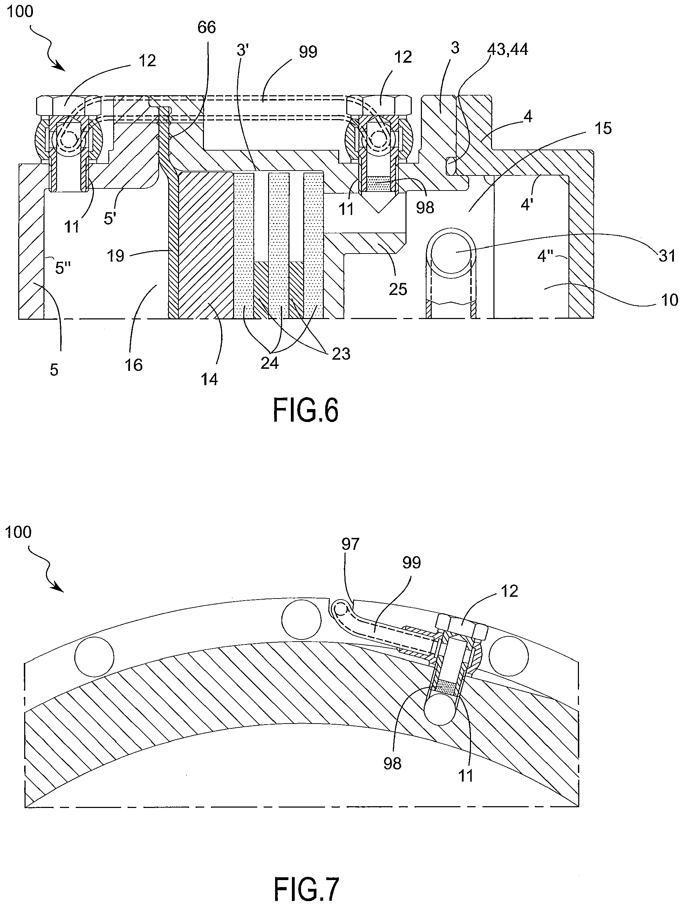

In the embodiment illustrated in figures 6 and 7 (where for the sake of simplicity of illustration the disc springs are not shown between the driving friction members 24), a pair of holes 11 is connected through a safety conduit 99, positioned in a suitable groove 97 outside of the tubular element 3 and the distal half-shell 5 and having axis substantially parallel to the rotation axis A. Moreover, inside one of the holes 11 of such a pair a fuse element 98 is sealably inserted, that prevents the passage of the liquid 13 through the safety conduit 99 during the normal operation of the coupling 100. On the other hand, a possible melting of the fuse element 98, due to an overheating of the liquid 13 in the compartment 51, opens the safety conduit 99, as described more clearly hereinafter.

According to a variant that is not illustrated, instead of the four pairs of threaded holes 11, it is possible to foresee only three holes 11, associated with respective plugs 12, arranged circumferentially at 90° from one another, plus possibly a hole 11 containing the fuse element 98, axially dislocated with respect to one of the three holes 11 and in fluid communication with it through the safety conduit 99.

The operation of the coupling 100 is substantially the following.

As already stated, the driving assembly 1 is connected to a motor (not shown, which can be electric), whereas the driven shaft 2 is connected to a user (not shown).

With the driving assembly 1 still, the compartment 51 of the coupling 100 is filled with liquid 13 that, by the force of gravity, fills the lower part of the coupling 100 up to a level that is the one illustrated in figures 1 and 3. The friction members 23, 24 are kept apart by the disc springs 22.

The compartment 51 can be filled with liquid 13 as explained above.

When the motor is started up, it sets the driving assembly 1 in rotation about the rotation axis A in one of the two directions of rotation R1, R2 indicated by the arrows of figure 4 and figure 5. Such rotation in particular involves the half-shells 4 and 5, the blades 10, the tubular element 3, the rigid septum 14, the elastically deformable septum 19, as well as the driving friction members 24, the pins 21 and the disc springs 22.

The blades 10 push the liquid 13 in rotation in the same direction of rotation as the driving assembly 1. The liquid 13, by virtue of the rotation, is distributed homogeneously by centrifugal force towards the outer circumferential surfaces 3', 4', 5' of the two chambers 15, 16 at a same level, which is the one schematically illustrated in figures 4 and 5. Moreover, whereas with the coupling 100 still the liquid 13 fills the lower part of the cavity formed between the first flange 65 and the second flange 60 (see figure 1), with the coupling started up, the liquid 13 is distributed circumferentially by centrifugal force along the ball bearing 7 so as to keep it lubricated (a characteristic not shown in figure 2 for the sake of simplicity of illustration). Initially, the pressure exerted by the liquid 13 at the two sides of the transverse faces of the rigid septum 14 and of the elastically deformable septum 19 is the same and they are in a stationary equilibrium position.

In such a situation the motor reaches the synchronous speed in a very short time and at substantially zero load.

By virtue of the particular arrangement of the inlet openings 31 of the two conduits 30 and of the speed difference between the liquid 13 (which rotates at the speed set by the motor) and the conduits 30 (which are still because fixedly connected to the driven shaft 20, which is still stationary), the liquid 13 enters into the opening 31 that is directed in the opposite direction with respect to the direction of rotation of the coupling 100 (in the example of figure 2 in the one positioned in the lower portion of the coupling 100) and starts to flow in the conduit 30 arriving, through the joining hole 48, the hole 47, the hole 81, the calibrated hole 82, the collection chamber 83, the hole 84, the distribution chamber 35, and the plurality of openings 87, in the second chamber 16, as schematically illustrated by the arrows of figure 2. This causes a transfer of liquid 13 from the first chamber 15 to the second chamber 16 and a differentiation of the level of the liquid 13 in the two chambers 15, 16, like the one schematically illustrated in figure 2. Such a difference in level of the liquid 13 (and, therefore in pressure distribution) between the two chambers generates a force in the axial direction that starts to push the elastically deformable septum 19, and therefore the rigid septum 14 and the friction members 23, 24, towards the stop 25.

As the difference in level of the liquid 13 between the two chambers 15, 16 increases, the aforementioned axial force increases until the elastically deformable septum 19 and the rigid septum 14 are able to exert a thrust such as to trigger the coupling between the driving friction members 24 and the driven friction members 23, which are pressed against one another. The driven shaft 20, pulled by the driven members 23, therefore starts to rotate and its speed increases until the speed of the driving assembly 1 is identical to the speed of the driven shaft 20 and therefore the torque transmitted by the coupling 100 coincides with the torque provided by the motor and required by the user.

Therefore, under normal operating conditions, the coupling 100 works without sliding and transmits all of the power supplied by the motor to the user.

As schematically illustrated by the arrows of figure 2, the liquid 13 that through the conduit 30 arrives in the distribution chamber 35 is conveyed inside the second chamber 16 through a preferential path defined by the plurality of openings 87. A minimal part of liquid 13 manages to penetrate inside the roller bearing 8, allowing the lubrication thereof, and to enter into the chamber 16 through the gap 46 present between the flow diverting member 32 and the annular insert 26. Most of the liquid 13 enters into the chamber 16 through the preferential path defined by the plurality of openings 87 and is diverted by the flow diverting member 32 towards the outer circumferential surface 5' of the second chamber 16. This forces the liquid 13 coming from the first chamber 15 to mix with the liquid 13 already contained in the second chamber 16 before being transferred again, when the second chamber 16 is full, towards the first chamber 15 through the radially inner passage 36. This advantageously makes it possible to mix the hotter liquid 13, coming from the first chamber 15, with the colder liquid present in the second chamber 16 and, therefore, to increase the thermal capacity of the coupling.

The transfer of liquid 13 from the first chamber 15 to the second chamber 16 through the conduit 30 (and when the second chamber 16 is full, from the second chamber 16 to the first chamber 15 through the inner radial passage 36) lasts until a situation of equilibrium is reached between the contrasting pressures acting on the inlet opening 31 of the conduit 30 and, in particular, between the different dynamic pressures due to different peripheral and radial speeds of the liquid 13 (which rotates at the speed set by the motor) and of the conduit 30 (which is fixedly connected to the driven shaft 20). This equilibrium of pressures generally occurs during the start-up phase, before the complete engagement of the coupling 100 (for example at about 2/3 of the start-up phase).

When the motor stops, the initial situation of figure 1 is restored in which the elastically deformable septum 19, thanks to the elasticity of its material, goes back into an initial axially undeformed rest position, also pulling the rigid septum 14 with it. Moreover, the friction members 23, 24 go back into an initial rest position in which they are suitably spaced apart thanks to the thrust exerted by the disc springs 22. This is advantageous because it prevents such friction members 23, 24 from being already packed at a subsequent start-up of the coupling 100, with consequent starting of the motor at non-zero load. The presence of the disc springs 22 also contributes to take the elastically deformable septum 19 and the rigid septum 14 back into their initial rest position. The bolts 33 for fixing the elastically deformable septum 19 and the rigid septum 14, going into abutment against the flow diverting member 32, limit the axial stroke of the two septums 19, 14 pushed by the disc springs 22.

In the case of sudden blocking of the user, i.e. of the driven shaft 20, the friction members 23, 24 start to slide and the power generated by the motor is transformed into heat by friction. The liquid 13 therefore heats up, especially close to the friction members 23, 24 and, once the melting temperature of the fuse element 98 has been reached, makes the latter melt, opening the respective hole 11 that places the two chambers 15, 16 in communication through the safety conduit 99. The liquid 13, left free to flow from the second chamber 16 to the first chamber 15, therefore restores a level of liquid that is equal in both chambers 15, 16. The pushing members 14, 19 thus decrease their thrust on the friction members 23, 24 until it is zeroed when the equal level of liquid is reached between the two chambers 15, 16.

The fuse element 98 is accessible by unscrewing the plug 12 of the respective hole 11 directly from the outer circumferential surface of the tubular element 3. In this way the replacement of the fuse element 98 can be carried out very simply, without the need to dismount the entire coupling 100.

The suitable sizing of the calibrated hole 82 and of the disc springs 22 makes it possible to adjust the duration of the start-up phase of the coupling 100 and therefore to adjust the progression of the torque transmitted during start-up.

## Claims

1. Hydraulic centrifugal coupling (100) comprising:
- a driving assembly (1) adapted to be set in rotation about a rotation axis (A),
- a driven assembly (2) adapted to be set in rotation about the rotation axis (A) for transmission of rotary motion from the driving assembly (1) to the driven assembly (2), said driving assembly (1) and said driven assembly (2) forming a compartment (51), adapted to contain liquid (13), having a first and second chamber (15, 16), axially separated from each other by pushing members (14, 19), said pushing members (14, 19) comprising a rigid septum (14) movable along an axial direction, parallel to said rotation axis (A),
- at least one driving friction member (24) and at least one driven friction member (23) arranged in said first chamber (15), movable along said axial direction,
wherein said first and second chamber (15, 16) are in fluid communication with each other so as to produce, in a rotation start-up phase of the driving assembly (1), a transfer of the liquid (13) from the first chamber (15) to the second chamber (16) that generates an axial pressure on said pushing members (14, 19) such as to press said at least one driving friction member (24) and said at least one driven friction member (23) one against the other and thus obtain said transmission of rotary motion from the driving assembly (1) to the driven assembly (2),
**characterized in that** said first and second chamber (15, 16) are respectively delimited in a radially outer position by a first and second outer circumferential surface (3', 5') and **in that** the pushing members (14, 19) also comprise an elastically deformable septum (19) fixed, at a radially outer portion thereof, between said first and second outer circumferential surface (3', 5'), said elastically deformable septum (19) being adapted to elastically deform under the axial pressure generated by said transfer of liquid (13) from the first chamber (15) to the second chamber (16) so as to axially push said rigid septum (14).

2. Coupling (100) according to claim 1, wherein the second chamber (16) comprises a flow diverting member (32) configured so as to divert the liquid (13) transferred from the first chamber (15) to the second chamber (16) from a radially inner position towards a radially outer position inside the second chamber (16).

3. Coupling (100) according to claim 1 or 2, wherein said fluid communication between said first and second chamber (15, 16) is obtained by means of a first conduit (30) which extends from the first chamber (15) to the second chamber (16), said first conduit (30) having an opening (31) in the first chamber (15) adapted to be immersed in the liquid (13) during rotation of the driving assembly (1) and arranged so as to face a first direction (R1) of rotation of the liquid (13) about the rotation axis (A).

4. Coupling (100) according to claim 3, wherein said fluid communication between said first and second chamber (15, 16) is also obtained by means of a second conduit (30) which extends from the first chamber (15) to the second chamber (16), said second conduit (30) having an inlet opening (31) into the first chamber (15) adapted to be immersed in the liquid (13) during rotation of the driving assembly (1) and arranged so as to face a second direction (R2) of rotation of the liquid (13), opposite the first direction (R1) of rotation of the liquid (13).

5. Coupling (100) according to any one of claims 1 to 4, wherein said at least one driving friction member (24) comprises a plurality of distinct plates separated from each other and circumferentially arranged in series.

6. Coupling (100) according to any one of claims 1 to 5, wherein said at least one driving friction member (24) and said at least one driven friction member (23) are kept suitably spaced from each other by suitable elastic means (22) comprising, for example, at least one disc spring.

7. Coupling (100) according to any one of claims 1 to 6, comprising, at an outer circumferential wall thereof, at least three holes (11) with respective plugs (12) intended to fill the compartment (51) with the liquid (13), two of which are arranged in diametrically opposite positions with respect to the rotation axis (A) in a plane transverse to it, and one at 90 ° from them in said transverse plane.

8. Coupling (100) according to any one of claims 3 to 7, wherein the first conduit (30) is in fluid communication with the second chamber (16) by means of a calibrated hole which is obtained in a replaceable piece of the coupling (80).

9. Coupling (100) according to any one of claims 4 to 8, wherein the second conduit (30) is in fluid communication with the second chamber (16) by means of a calibrated hole (82) which is obtained in a replaceable piece of the coupling (80).

10. Coupling (100) according to any one of claims 1 to 9, wherein in a contact area between said radially outer portion of the elastically deformable septum (19) and said first and second outer circumferential surfaces (3', 5') of the chambers (15, 16), said outer circumferential surfaces (3', 5') are corrugated so as to increase the coupling seal between the elastically deformable septum (19) and said first and second outer circumferential surface (3', 5').

## Patentansprüche

1. Hydraulische Zentrifugalkupplung (100), umfassend:
- eine Antriebsanordnung (1), die dazu geeignet ist, um eine Drehachse (A) in Drehung versetzt zu werden,
- eine angetriebene Anordnung (2), die dazu geeignet ist, um die Drehachse (A) in Drehung versetzt zu werden zur Übersetzung der Drehbewegung von der Antriebsanordnung (1) zu der angetriebenen Anordnung (2), wobei die Antriebsanordnung (1) und die angetriebene Anordnung (2) einen Raum (51) bilden, der dazu geeignet ist, Flüssigkeit (13) zu enthalten und eine erste und zweite Kammer (15, 16) aufweist, die durch Schiebeelemente (14, 19) axial voneinander getrennt sind, wobei die Schiebeelemente (14, 19) eine starre Trennwand (14) umfassen, die längs einer parallel zur Drehachse (A) verlaufenden, axialen Richtung beweglich ist,
- wenigstens ein Antriebsreibungselement (24) und wenigstens ein angetriebenes Reibungselement (23), die in der ersten Kammer (15) angeordnet und längs der axialen Richtung beweglich sind,
wobei die erste und zweite Kammer (15, 16) miteinander in fluidischer Verbindung stehen, um in einer Drehanlaufphase der Antriebsanordnung (1) eine Übertragung der Flüssigkeit (13) von der ersten Kammer (15) zu der zweiten Kammer (16) zu bewirken, die einen axialen Druck auf die Schiebeelemente (14, 19) bewirkt, um das wenigstens eine Antriebsreibungselement (24) und das wenigstens eine angetriebene Reibungselement (23) gegeneinander zu drücken und dadurch die Übersetzung der Drehbewegung von den Antriebsanordnung (1) zu der angetriebenen Anordnung (2) zu erhalten,
**dadurch gekennzeichnet, dass** die erste und zweite Kammer (15, 16) jeweils in einer radial äußeren Position durch eine erste und zweite Außenumfangsfläche (3', 5') begrenzt sind und dadurch, dass die Schiebeelemente (14, 19) auch eine elastisch verformbare Trennwand (19) umfassen, die in einem radial äußeren Abschnitt derselben zwischen der ersten und zweiten Außenumfangsfläche (3', 5') befestigt ist, wobei die elastisch verformbare Trennwand (19) dazu geeignet ist, sich unter dem axialen Druck, der durch die Übertragung der Flüssigkeit (13) von der ersten Kammer (15) zu der zweiten Kammer (16) erzeugt wird, elastisch zu verformen, um die starre Trennwand (14) axial zu verschieben.

2. Kupplung (100) nach Anspruch 1, wobei die zweite Kammer (16) ein Flussumlenkelement (32) umfasst, das ausgebildet ist, um die Flüssigkeit (13), die von der ersten Kammer (15) zu der zweiten Kammer (16) geleitet wird, von einer radial inneren Position zu einer radial äußeren Position im Inneren der zweiten Kammer (16) umzulenken.

3. Kupplung (100) nach Anspruch 1 oder 2, wobei die fluidische Verbindung zwischen der ersten und zweiten Kammer (15, 16) erhalten ist mittels einer ersten Leitung (30), die sich von der ersten Kammer (15) zu der zweiten Kammer (16) erstreckt, wobei die erste Leitung (30) eine Öffnung (31) in die erste Kammer (15) aufweist, die dazu geeignet ist, während der Drehung der Antriebsvorrichtung (1) in die Flüssigkeit (13) eingetaucht und so angeordnet zu sein, dass sie einer ersten Drehrichtung (R1) der Flüssigkeit (13) um die Drehachse (A) zugewandt ist.

4. Kupplung (100) nach Anspruch 3, wobei die fluidische Verbindung zwischen der ersten und zweiten Kammer (15, 16) weiter erhalten ist mittels einer zweiten Leitung (30), die sich von der ersten Kammer (15) zu der zweiten Kammer (16) erstreckt, wobei die zweite Leitung (30) eine Eingangsöffnung (31) in der ersten Kammer (15) aufweist, die dazu geeignet ist, während der Drehung der Antriebsvorrichtung (1) in die Flüssigkeit (13) eingetaucht und so angeordnet zu sein, dass sie einer zweiten Drehrichtung (R2) der Flüssigkeit (13) zugewandt ist, die der ersten Drehrichtung (R1) der Flüssigkeit (13) entgegengesetzt ist.

5. Kupplung (100) nach einem der Ansprüche 1 bis 4, wobei das wenigstens eine Antriebsreibungselement (24) eine Mehrzahl von verschiedenen Platten umfasst, die voneinander getrennt und umfangseitig in Reihe angeordnet sind.

6. Kupplung (100) nach einem der Ansprüche 1 bis 5, wobei das wenigstens eine Antriebsreibungselement (24) und das wenigstens eine angetriebene Reibungselement (23) durch geeignete elastische Mittel (22), umfassend beispielsweise wenigstens eine Tellerfeder, angemessen voneinander beabstandet sind.

7. Kupplung (100) nach einem der Ansprüche 1 bis 6, umfassend, an einer Außenumfangswand derselben, wenigstens drei Bohrungen (11) mit jeweiligen Stopfen (12), die dazu bestimmt sind, den Raum (51) mit der Flüssigkeit (13) zu füllen, wobei zwei davon in diametral entgegengesetzten Positionen in Bezug auf die Drehachse (A) auf einer zu ihr querlaufenden Ebene angeordnet sind und eine im Winkel von 90° zu ihnen auf der querlaufenden Ebene angeordnet ist.

8. Kupplung (100) nach einem der Ansprüche 3 bis 7, wobei die erste Leitung (30) mit der zweiten Kammer (16) mittels einer kalibrierten Bohrung in fluidischer Verbindung ist, die in einem austauschbaren Teil der Kupplung (80) herausgearbeitet ist.

9. Kupplung (100) nach einem der Ansprüche 4 bis 8, wobei die zweite Leitung (30) mit der zweiten Kammer (16) mittels einer kalibrierten Bohrung (82) in fluidischer Verbindung ist, die in einem austauschbaren Teil der Kupplung (80) herausgearbeitet ist.

10. Kupplung (100) nach einem der Ansprüche 1 bis 9, wobei in einem Kontaktbereich zwischen dem radial äußeren Abschnitt der elastisch verformbaren Trennwand (19) und den ersten und zweiten Außenumfangsflächen (3', 5') der Kammern (15, 16) die Außenumfangsflächen (3', 5') gewellt sind, um den Kupplungsverschluss zwischen der elastisch verformbaren Trennwand (19) und den ersten und zweiten Außenumfangsflächen (3', 5') zu vergrößern.

## Revendications

1. Accouplement centrifuge hydraulique (100) comprenant :
- un ensemble d'entraînement (1) adapté pour être mis en rotation autour d'un axe de rotation (A),
- un ensemble entraîné (2) adapté pour être mis en rotation autour de l'axe de rotation (A) pour la transmission d'un mouvement de rotation de l'ensemble d'entraînement (1) à l'ensemble entraîné (2), ledit ensemble d'entraînement (1) et ledit ensemble entraîné (2) formant un compartiment (51), adapté pour contenir un liquide (13), ayant une première et une deuxième chambre (15, 16), séparées axialement l'une de l'autre par des éléments pousseurs (14, 19), lesdits éléments pousseurs (14, 19) comprenant une cloison rigide (14) mobile suivant une direction axiale, parallèle audit axe de rotation (A),
- au moins un élément de friction d'entraînement (24) et au moins un élément de friction entraîné (23) agencé dans ladite première chambre (15), mobile suivant ladite direction axiale,
dans lequel lesdites première et deuxième chambres (15, 16) sont en communication de fluide entre elles de manière à produire, dans une phase de démarrage de rotation de l'ensemble d'entraînement (1), un transfert du liquide (13) de la première chambre (15) à la deuxième chambre (16) qui génère une pression axiale sur lesdits éléments pousseurs (14, 19) de manière à presser ledit au moins un élément de friction d'entraînement (24) et ledit au moins un élément de friction entraîné (23) l'un contre l'autre et obtenir ainsi ladite transmission de mouvement de rotation de l'ensemble d'entraînement (1) à l'ensemble entraîné (2),
**caractérisé en ce que** lesdites première et deuxième chambres (15, 16) sont délimitées respectivement dans une position radialement extérieure par une première et une deuxième surface circonférentielle extérieure (3', 5') et **en ce que** les éléments pousseurs (14, 19) comprennent également une cloison déformable élastiquement (19) fixée, au niveau d'une portion radialement extérieure de celle-ci, entre lesdites première et deuxième surfaces circonférentielles extérieures (3', 5'), ladite cloison déformable élastiquement (19) étant adaptée pour se déformer élastiquement sous la pression axiale générée par ledit transfert de liquide (13) de la première chambre (15) à la deuxième chambre (16) de manière à pousser axialement ladite cloison rigide (14).

2. Accouplement (100) selon la revendication 1, dans lequel la deuxième chambre (16) comprend un élément de déviation d'écoulement (32) configuré pour dévier le liquide (13) transféré de la première chambre (15) à la deuxième chambre (16) d'une position radialement intérieure vers une position radialement extérieure à l'intérieur de la deuxième chambre (16).

3. Accouplement (100) selon la revendication 1 ou 2, dans lequel ladite communication de fluide entre lesdites première et deuxième chambres (15, 16) est obtenue au moyen d'un premier conduit (30) qui s'étend de la première chambre (15) à la deuxième chambre (16), ledit premier conduit (30) ayant une ouverture (31) dans la première chambre (15) adaptée pour être immergée dans le liquide (13) durant la rotation de l'ensemble d'entraînement (1) et agencée pour être orientée vers une première direction (R1) de rotation du liquide (13) autour de l'axe de rotation (A).

4. Accouplement (100) selon la revendication 3, dans lequel ladite communication de fluide entre lesdites première et deuxième chambres (15, 16) est également obtenue au moyen d'un deuxième conduit (30) qui s'étend de la première chambre (15) à la deuxième chambre (16), ledit deuxième conduit (30) ayant une ouverture d'entrée (31) dans la première chambre (15) adaptée pour être immergée dans le liquide (13) durant la rotation de l'ensemble d'entraînement (1) et agencée pour être orientée vers une deuxième direction (R2) de rotation du liquide (13), opposée à la première direction (R1) de rotation du liquide (13).

5. Accouplement (100) selon l'une quelconque des revendications 1 à 4, dans lequel ledit au moins un élément de friction d'entraînement (24) comprend une pluralité de plaques distinctes séparées entre elles et agencées en série de manière circonférentielle.

6. Accouplement (100) selon l'une quelconque des revendications 1 à 5, dans lequel ledit au moins un élément de friction d'entraînement (24) et ledit au moins un élément de friction entraîné (23) sont maintenu espacés l'un de l'autre de manière appropriée par des moyens élastiques appropriés (22) comprenant, par exemple, au moins un ressort à disque.

7. Accouplement (100) selon l'une quelconque des revendications 1 à 6, comprenant, au niveau d'une paroi circonférentielle extérieure de celui-ci, au moins trois trous (11) avec des bouchons respectifs (12) prévus pour remplir le compartiment (51) avec le liquide (13), dont deux sont agencés dans des positions diamétralement opposées par rapport à l'axe de rotation (A) dans un plan transversal à celui-ci, et un à 90 ° par rapport à ceux-ci dans ledit plan transversal.

8. Accouplement (100) selon l'une quelconque des revendications 3 à 7, dans lequel le premier conduit (30) est en communication de fluide avec la deuxième chambre (16) au moyen d'un trou calibré qui est obtenu dans une pièce remplaçable de l'accouplement (80).

9. Accouplement (100) selon l'une quelconque des revendications 4 à 8, dans lequel le deuxième conduit (30) est en communication de fluide avec la deuxième chambre (16) au moyen d'un trou calibré (82) qui est obtenu dans une pièce remplaçable de l'accouplement (80).

10. Accouplement (100) selon l'une quelconque des revendications 1 à 9, dans lequel, dans une surface de contact entre ladite portion radialement extérieure de la cloison déformable élastiquement (19) et lesdites première et deuxième surfaces circonférentielles extérieures (3', 5') des chambres (15, 16), lesdites surfaces circonférentielles extérieures (3', 5') sont ondulées de manière à augmenter l'étanchéité d'accouplement entre la cloison déformable élastiquement (19) et lesdites première et deuxième surfaces circonférentielles extérieures (3', 5').
